# EUROPÄISCHE PATENTSCHRIFT

(11) **EP 0 499 839 B1**
(45) Veröffentlichungstag und Bekanntmachung des Hinweises auf die Patenterteilung: **21.09.1994**
(21) Anmeldenummer: 92101369.4
(22) Anmeldetag: 28.01.1992
(51) Int. Cl.: H01R 13/44, H01M 2/10, H01M 10/46, B26B 19/28

(54) **Elektrogerät**
Electrical apparatus
Appareil électrique

(30) Priorität: 18.02.1991 DE 4104884
(43) Veröffentlichungstag der Anmeldung: 26.08.1992
(73) Patentinhaber: Braun Aktiengesellschaft, Frankfurt am Main (DE)
(72) Erfinder: Schinke, Horst, D-61476 Kronberg (DE); Jung, Robert, Dr., D-61169 Friedberg (DE)

(56) Entgegenhaltungen:
- DE-A- 3 025 159
- US-A- 4 977 042

## Beschreibung

Die Erfindung bezieht sich auf ein Elektrogerät mit einem Gehäuse zur Aufnahme wenigstens eines Funktionsteils und mindestens einer mit dem Funktionsteil zusammenwirkenden und aufladbaren Speicherzelle sowie einer Speicherzellenladeschaltung mit einem am Gerät vorgesehenen Gerätestecker, der aus einem Steckerbuchsengehäuse mit einer Steckerstifte aufweisenden Einstecköffnung besteht, die zur formschlüssigen Aufnahme einer Gerätesteckdose eines Netzkabels für die Stromversorgung der Speicherzelle dient.

Derartige, mittels aufladbarer Speicherzellen betriebene Elektrogeräte, wie zum Beispiel Rasierapparate, Zahnbürsten, Schraubendreher, Bohrmaschinen, Taschenlampen usw. befinden sich in großer Zahl im praktischen Einsatz (siehe zum Beispiel die US-A-4 977 042). Zwecks Aufladung der Speicherzellen sind diese Elektrogeräte mit einem aus Sicherheitsgründen genormten Gerätestecker ausgestattet, in dessen Einstecköffnung ebenfalls eine genormte Gerätesteckdose eines Netzkabels zur Übertragung einer Netzspannung formschlüssig einsteckbar ist. Der Gebrauchsnutzen derartiger Elektrogeräte ist sehr hoch, da die Speicherzellen wiederholt und sehr oft aufgeladen werden können. Nach jedem Aufladevorgang steht ein voll funktionsfähiges Elektrogerät zur Verfügung, das dann ohne Netzkabelanschluß eingesetzt werden kann. Vielfach ist die Speicherzellenladeschaltung derartiger Elektrogeräte mit weiteren elektrischen Bauelementen versehen, die unabhängig vom Ladezustand der Speicherzellen einen Betrieb des Elektrogerätes mittels direkter Netzspannungsversorgung gewährleisten.

Aufladbare Speicherzellen haben bekanntlich eine begrenzte Lebensdauer. Demzufolge sollten mit aufladbaren Speicherzellen ausgestattete Elektrogeräte konstruktiv derart ausgestaltet werden, daß eine sichere Entsorgung verbrauchter Speicherzellen durchführbar ist.

Aufgabe der Erfindung ist es, ein Elektrogerät der eingangs angegebenen Art in der Weise auszubilden, daß die aufladbaren Speicherzellen auf einfache Weise aus dem Elektrogerät entnommen werden können, ohne daß der Benutzer mit der gefährlichen Netzspannung in Berührung kommen kann.

Nach der Erfindung wird diese Aufgabe bei einem Gerät der eingangs genannten Art dadurch gelöst, daß das Steckerbuchsengehäuse und/oder die Steckerstifte drehbar angeordnet sind, daß am Steckerbuchsengehäuse mit einem abnehmbaren Gehäuse bzw. Gehäuseteil zusammenwirkende Riegelelemente vorgesehen sind, und daß Mittel zur Unterbrechung einer im Gehäuse angeordneten Stromversorgungsleitung vorgesehen sind.

Hierdurch kann auf einfache Weise das Steckerbuchsengehäuse in verschiedene Positionen verstellt werden, um in der einen Stellung das abnehmbare Gehäuseteil am Gerät festzusetzen und in einer weiteren Stellung das abnehmbare Gehäuseteil zu entriegeln, so daß es dann zur Entsorgung der Speicherzellen vom Gerät entfernt werden kann. Durch Drehen der Steckerbuchsen kann auch auf einfache Weise die Stromversorgung derart unterbrochen werden, daß die Bedienungsperson mit der gefährlichen Netzspannung nicht in Berührung kommen kann.

Hierzu ist es vorteilhaft, daß das Steckerbuchsengehäuse im Gehäuse des Gerätes gegenüber den Steckerstiften drehbar aufgenommen ist und daß die Steckerstifte auf einer Steckerplatte feststehend angeordnet und über mindestens je eine eine Sollbruchstelle aufweisende Leiterfahne mit der bzw. den Speicherzellen verbunden sind. Da die einzelnen Leiterfahnen mit Sollbruchstellen ausgestattet sind, kann durch leichtes Drehen des Steckerbuchsengehäuses die Leiterfahne ohne weiters durchtrennt und somit die Stromversorgung zu den Speicherzellen vollständig unterbrochen werden. Eine Inbetriebnahme des Gerätes ist nur durch geschultes Fachpersonal möglich. Auf diese Weise wird jegliche Gefährdung der Bedienungsperson ausgeschlossen, da auch beim Einstecken der Gerätesteckdose in das Gerät keine Inbetriebnahme des Gerätes mehr möglich ist.

Eine zusätzliche Möglichkeit ist gemäß einer Weiterbildung der erfindungsgemäßen Vorrichtung, daß das Gerät aus einem Gehäusechassis, mindestens einem auf das Gehäusechassis aufbringbaren Gehäuse und einem das Gehäuse vervollständigenden Gehäuseteil gebildet ist, wobei Gehäuse und/oder das Gehäusechassis zur Aufnahme des Steckerbuchsengehäuses und der Steckerplatte dient. Vorteilhaft ist es ferner, daß ein Teil des Gehäuses als Hülse ausgebildet ist, die auf das Gehäusechassis soweit aufschiebbar ist, bis sie gegen eine am Gehäuse bzw. Gehäusechassis vorgesehene Anschlagwand zur Anlage kommt und das Gehäuseteil in etwa die gleiche Außenkontur wie die Hülse aufweist, topfartig ausgebildet, mit einer Öffnung zur Aufnahme einer Gerätesteckdose ausgestattet und an das untere Ende der Hülse ansetzbar ist.

Von besonderer Bedeutung ist für die vorliegende Erfindung, daß das topfartige Gehäuseteil an seiner einen Breitseite ein freitragendes Wandelement aufweist, das etwas schmäler ist als die Breitseite und in eine auf einer Seite des Gehäuses vorgesehene längliche Ausnehmung einfügbar ist.

In weiterer Ausgestaltung der Erfindung ist es vorteilhaft, daß am unteren Ende des Chassis eine nach einer Seite hin offene Ausnehmung mit einer zumindest teilweise ringförmigen Nut zur Aufnahme der Steckerplatte mit den beiden feststehenden Steckerstiften und zur drehbaren Aufnahme eines ringförmigen Ansatzes des Steckerbuchsengehäuses vorgesehen ist und das Steckerbuchsengehäuse auf einem auf der Steckerplatte fest angeordneten ringförmigen Ansatz begrenzt drehbar gelagert ist, wobei das Steckerbuchsengehäuse zylinderförmig ausgebildet ist und an seinem Gehäusemantel mindestens eine Verriegelungsnase aufweist. Vorteilhaft ist es außerdem, daß auf den Gehäusemantel des Steckerbuchsengehäuses eine Arretierungsplatte aufsetzbar ist, die mit mindestes einer, eine Erweiterung aufweisenden Öffnung derart versehen ist, daß die Arretierungsplatte mit der Öffnung und der Erweiterung über die Verriegelungsnase schiebbar und dann durch Drehen des Steckerbuchsengehäuses und/oder der Arretierungsplatte hinter der Verriegelungsnase festsetzbar ist.

Somit läßt sich auf einfache Weise zur Entsorgung der Speicherzelle der die Speicherzellen aufnehmende Raum freilegen, da hierzu das Steckerbuchsengehäuse lediglich um ca. 90° gedreht zu werden braucht bzw. so weit, bis die dem Gerätestecker angepaßte Einstecköffnung mit ihren beiden Längsseiten die durch die beiden Steckerstifte verlaufende Ebene in einem rechten Winkel schneidet. In dieser Stellung sind auch die beiden mit den Steckerstiften verbundenen Leiterfahnen durchtrennt. Ebenfalls befinden sich die Verriegelungsnasen im Bereich der Erweiterung der in der Arretierungsplatte vorgesehenen Öffnung, so daß nunmehr die Arretierungsplatte mit dem unteren topfartigen Gehäuse abgenommen werden kann. Anschließend braucht nur noch das hülsenartige Gehäuse bzw. Gehäuseteil vom Chassis abgezogen zu werden, um die Speicherzellen freizulegen, die dann entsorgt werden können.

Um das Gerät wieder in Betrieb nehmen zu können, müssen durch den Fachhandel lediglich die Leiterfahnen und die Speicherzellen ersetzt werden. Danach kann das Gerät auf einfache Weise wieder zusammengesetzt und in Betrieb genommen werden.

Eine zusätzliche Überwachungsmöglichkeit ist gemäß einer Weiterbildung des erfindungsgemäßen Verfahrens, daß in dem Gehäuseteil eine Öffnung vorgesehen ist, durch die sich im angebauten Zustand des Gehäuseteils am Gehäuse das Steckerbuchsengehäuse mit den beiden Steckerstiften erstreckt. Vorteilhaft ist es ferner, daß das Steckerbuchsengehäuse auf einer Seite gegen Stellkräfte verstellbare Arretierungselemente aufweist, die in in der Steckerplatte bzw. in dem Ansatz vorgesehene Rastlöcher einrastbar sind. Außerdem ist es vorteilhaft, daß die Rastlöcher unterschiedlich tief und die Leiterfahnen winkelförmig ausgebildet sind, wobei der eine Schenkel der Leiterfahne mit der Steckerplatte oder mit den Steckerstiften fest verbunden und der andere Schenkel in einer im Gehäuseteil vorgesehenen schlitzartigen Öffnung aufgenommen ist. Gemäß einer Ausführungsform der Erfindung ist schließlich vorgesehen, daß das Steckerbuchsengehäuse stirnseitig mit mindestens einer schlitzartigen Aussparung zur Aufnahme eines Stellelementes versehen ist und daß durch Drehen des Steckerbuchsengehäuses die Leiterfahnen zerstört werden.

Nach einer bevorzugten Ausführungsform der Erfindung ist schließlich vorgesehen, daß die am Steckerbuchsengehäuse vorgesehenen Arretierungselemente beim Drehvorgang des Steckerbuchsengehäuses gegen die Leiterfahnen bewegt werden und diese durchtrennen. Hierzu ist es vorteilhaft, daß sich auf der Stirnfläche des Ansatzes im Anschluß an die Raststelle zur Aufnahme der Stößel eine kreisbogenförmige Vertiefung anschließt, über die die Leiterfahne gelegt und auf der der Stößel geführt ist.

Weitere Merkmale der Erfindung sind in den Unteransprüchen, in der Beschreibung und in den Figuren beschrieben bzw. dargestellt, wobei bemerkt wird, daß alle Einzelmerkmale und alle Kombinationen von Einzelmerkmalen erfindungswesentlich sind.

In den Figuren ist die Erfindung an einer Ausführungsform beispielsweise dargestellt, ohne auf diese Ausführungsform beschränkt zu sein. Es zeigt:
- Figur 1: einen Rasierapparat mit einem hülsenartigen Gehäuseteil in perspektivischer Darstellung;
- Figur 2: ein weiteres Ausführungsbeispiel eines Rasierapparates in perspektivischer Darstellung;
- Figur 3: eine Explosionsdarstellung eines geöffneten Rasierapparates mit abgenommenem Gehäuseteil, einer Steckerplatte und einem Steckerbuchsengehäuse, die Teil eines Gerätesteckers sind, sowie ein Netzkabel;
- Figur 4: eine Explosionsdarstellung von Teilen des Gerätesteckers sowie des Gehäuses;
- Figur 5: eine perspektivische Darstellung der Steckerplatte und des abgenommenen Steckerbuchsengehäuses;
- Figur 6: einen geöffneten Rasierapparat mit hochgeklappten, aufladbaren Speicherzellen.

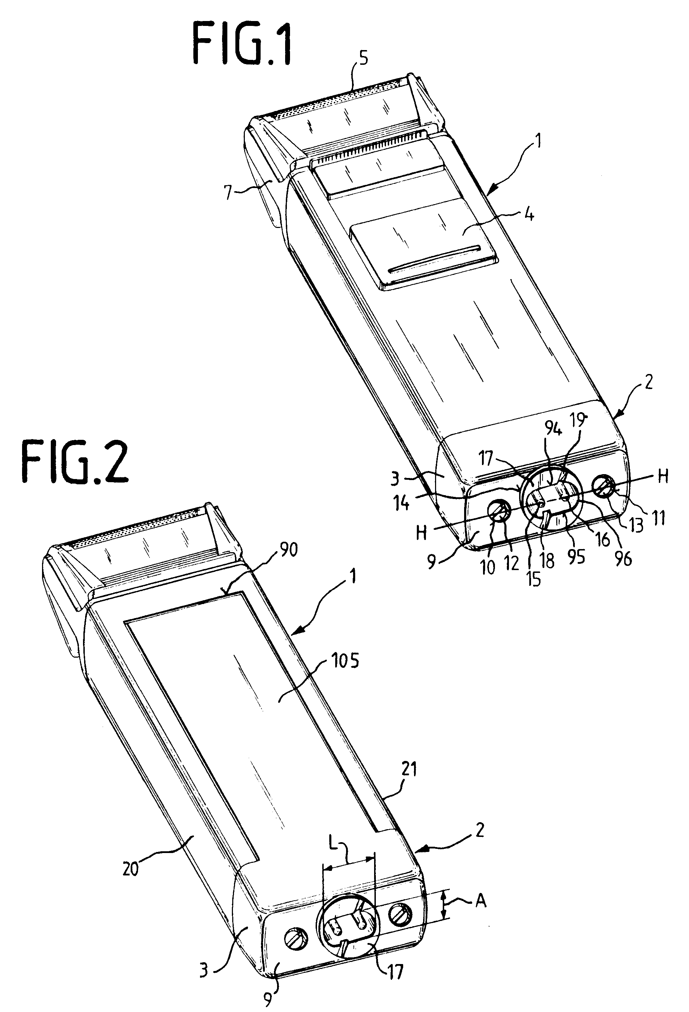

Fig.1 zeigt ein Elektrogerät, insbesondere einen Trockenrasierapparat mit einem Gehäuse 1 und einem topfartigen Gehäuseteil 2,3, einem auf der Frontseite des Gehäuses 1 verschiebbar angeordneten Ein- und Ausschalter 4 für den im Gehäuse 1 befindlichen elektrischen Antrieb und einen auf dem oberen Ende des Gehäuses 1 vorgesehenen Scherkopf 5.

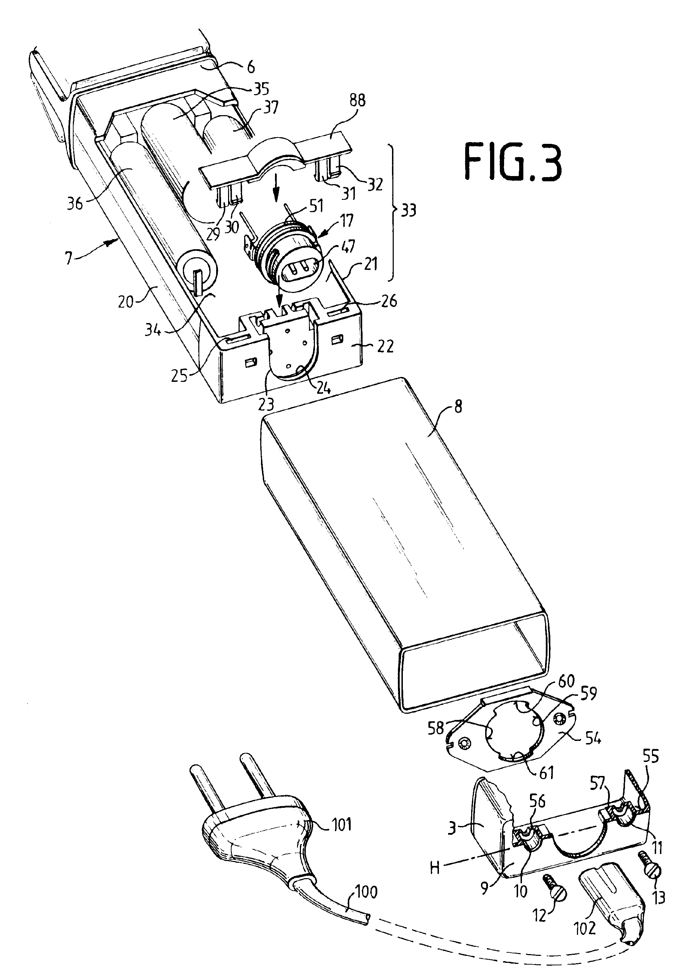

Das Gehäuse 1 besteht (Figur 3) aus einer das Gehäusechassis 7 umgebenden Hülse 8 und dem die Hülse 8 gegen eine am Gehäusechassis 7 vorgesehene Anschlagwand 6 haltenden, abnehmbaren Gehäuseteil 2, das topfförmig ausgebildet und der Außenkontur der Hülse 8 angepaßt ist. Das Gehäuseteil 2 weist eine Bodenwand 9 auf, in der zwei runde Ausnehmungen 10,11 mit darin angeordneten Schrauben 12,13 sowie eine zylindrische Öffnung 14 vorgesehen sind, in der ein zwei Steckerstifte 15,16 umgebendes Steckerbuchsengehäuse 17 aus der Öffnung 14 herausragend angeordnet ist. Zwei in die Frontseite des Steckerbuchsengehäuses 17 eingeformte Schlitze sind mit 18 und 19 gekennzeichnet und dienen zur Aufnahme einer Münze zum Zwecke der Verdrehung des Steckerbuchsengehäuses.

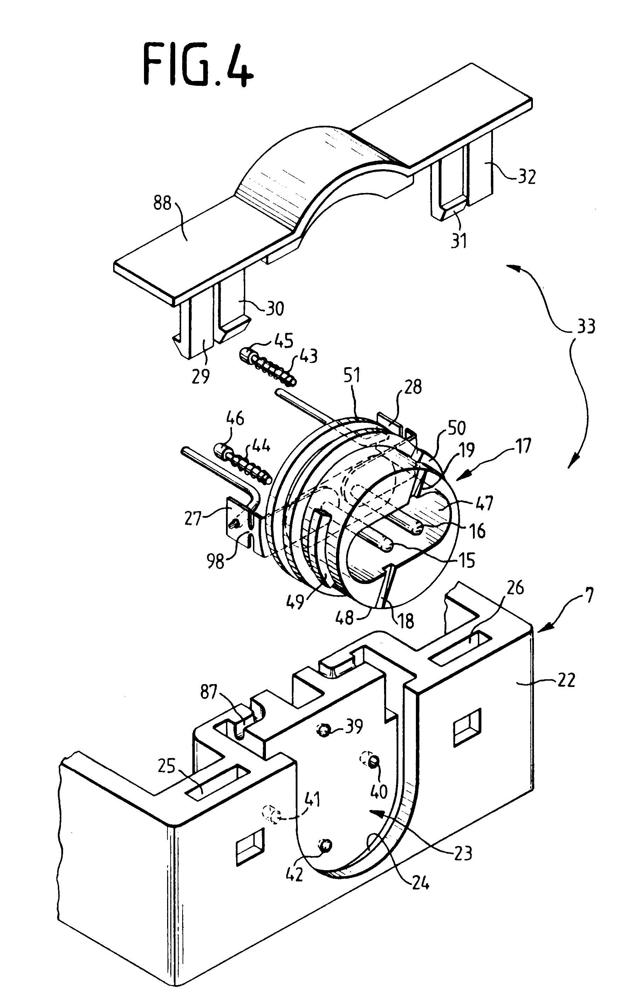

Ein zum Aufladen der auf dem Gehäusechassis 7 angeordneten Speicherzellen 36,37 oder auch zum direkten Netzbetrieb des Elektrogerätes bzw. des Rasierapparates erforderliches Netzkabel ist mit 100 bezeichnet. Das Netzkabel 100 ist einerseits mit einem üblichen Netzgerätestecker 101 und andererseits mit einer für den Anschluß an das Elektrogerät bestimmten Gerätesteckdose 102 versehen. Die Gerätesteckdose 102 weist eine der Einstecköffnung 47 des Steckerbuchsengehäuses 17 angepaßte äußere Form auf, die bestimmt ist, durch zwei in horizontaler Richtung H (Figur 1,4) verlaufende, ebenflächig ausgebildete Seitenwände 94,95 (Figur1,2) und zwei diese in vertikaler Richtung miteinander verbindende runde Schmalseitenwände, wobei der Abstand A (Figur 2) der horizontalen Seitenwände zueinander wesentlich geringer ist als der Abstand L der runden Schmalseitenwände 96 zueinander. Zwischen den in horizontaler Richtung H verlaufenden Seitenwänden sind auf einer parallel zu diesen verlaufenden Ebene zwei Steckerstifte 15,16 in der Einstecköffnung 47 vorgesehen. Der Abstand der Steckerstifte plus Durchmesser eines der Steckerstifte 15,16 entspricht bei derartigen elektrischen Geräten wie Rasierapparaten, Zahnbürsten und dergleichen in etwa dem Abstand A der horizontalen Seitenwände (Figur 2,3).

Das Gehäuse 1 (siehe Figur 3) besteht im wesentlichen aus zwei in Längsrichtung verlaufenden Seitenwänden 20, 21, die an dem der Anschlagwand 6 gegenüberliegenden Ende mittels einer Wand 22 miteinander verbunden sind. Die Seitenwände 20,21 und die Wand 22 umschließen eine Leiterplatte 34, auf der der elektrische Antriebsmotor 35, die aufladbaren Speicherzellen 36,37 sowie weitere elektrische Bauelemente einer elektrischen Schaltung vorgesehen sind.

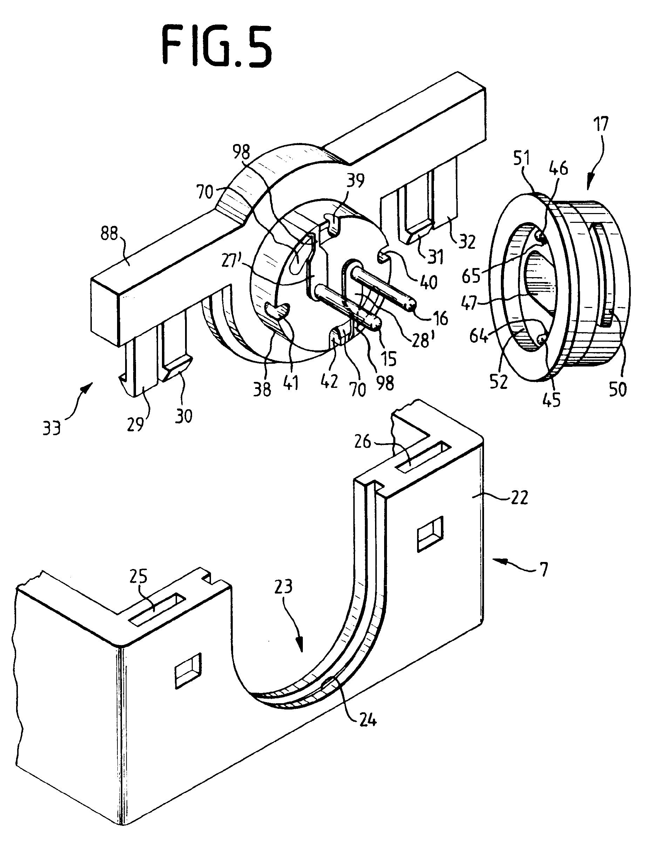

In der Wand 22 sind (Figur 3 bis 5) eine nach oben offene bzw. U-förmige Ausnehmung 23 mit einer teilweise umlaufenden Nut 24 sowie zwei Einstecköffnungen 25,26 für die Verriegelungshaken 29,30,31,32 einer Steckerplatte 33 vorgesehen. An der Steckerplatte 33 ist ein zylindrischer Ansatz 38 (Figur 5) angeformt, in dem vier Rastpositionen bzw. Rastlöcher 39,40,41,42 für den im verdrehbaren Steckerbuchsengehäuse 17 angeordneten, gegen den Druck von Federn 43,44 bewegbaren Stößel 45,46 eingeformt sind. Die in der Steckerplatte 33 fest angeordneten Steckerstifte 15,16 sind einerseits mit einer elektrischen Schaltung des Rasierapparates leitend verbunden und ragen andererseits in die für eine Gerätesteckdose 102 des Netzkabels 100 bestimmte Einstecköffnung 47 des drehbar gelagerten Steckerbuchsengehäuses 17 hinein. Die Steckerplatte 33 und das Steckerbuchsengehäuse 17 bilden ebenfalls im Elektrogerät einen Gerätestecker.

Das Steckerbuchsengehäuse 17 (Figur 5) weist eine zylindrische Form mit zwei an seinem Zylindermantel 48 diametral zueinander angeformten Verriegelungsnasen 49,50 und einen umlaufenden, ringförmigen Ansatz 51 auf. Auf der der Steckerplatte 33 zugewandten Seite ist das Steckerbuchsengehäuse 17 mit einer zylindrischen Ausnehmung 52 versehen (siehe Fig. 5), deren Durchmesser mit dem Durchmesser des zylindrischen Ansatzes 38 der Steckerplatte 33 derart abgestimmt ist, daß eine einwandfreie Halterung und Führung im Verlauf der Drehbewegung des Steckerbuchsengehäuses 17 auf dem zylindrischen Ansatz 38 gewährleistet ist. Nach dem Aufsetzen des Steckerbuchsengehäuses 17 auf den zylindrischen Ansatz 38 der Steckerplatte 33 werden beide Bauteile gemeinsam in die Ausnehmung 23 eingesetzt. Hierbei werden die Verriegelungshaken 29 bis 32 in die Einstecköffnung 25,26 der Wand 22 und gleichzeitig der ringförmige Ansatz 51 des Steckerbuchsengehäuses 17 in die Nut 24 der U-förmigen Ausnehmung 23 der Steckerplatte 33 eingeschoben. Auf diese Weise wird die Steckerplatte 33 und das Steckerbuchsengehäuse 17 mit der Wand 22 des Gehäuseschassis 7 gekoppelt. Mit Erreichen der vorgesehenen Einrastposition ist das Steckerbuchsengehäuse 17 einerseits auf der Steckerplatte 33 und andererseites in der Wand 22 drehbar gelagert.

Nach der in Figur 3 dargestellten Ausführungsform ist dem topfförmig ausgebildeten, abnehmbaren Gehäuseteil 3 eine, mit einer Öffnung 53 versehene Arretierungsplatte 54 zugeordnet, die mittels der Schrauben 12 und 13 an der Innenwand 55 der Bodenwand 9 an diametral gegenüberliegend angeformten Abstandshalterungen 56,57 befestigt ist. Die Öffnung 53 in der Arretierungsplatte 54 ist aus jeweils zwei diametral gegenüberliegenden, sektorartigen Vorsprüngen 58,59 sowie zwei, diese Sektoren voneinander trennenden, diametral gegenüberliegenden, sektorartigen Ausschnitten 60,61 gebildet. Die sektorartigen Vorsprünge 58,59 bilden mit den Abstandshalterungen 56 und 57 im angeschraubten Zustand der Platte 53 zwei Verriegelungsnasen, während die um 90° versetzt zu diesen, in der Arretierungsplatte 53 vorgesehenen, sektorartigen Ausschnitte 60 und 61 derart bemessen und gestaltet sind, daß die am Steckerbuchsengehäuse 17 angeformten Verriegelungsnasen 49 und 50 durch diese Ausschnitte 60 und 61 hindurchgeführt werden können.

Im in der Wand 22 eingekoppelten Zustand von Steckerbuchsengehäuse 17 und Steckerplatte 33 verlaufen die sich in horizontaler Richtung erstreckenden Seitenwände 94,95 der Einstecköffnung 47 parallel zur Frontkante 3 des Gehäuses 1, wie das in Fig. 1,2 dargestellt ist. In dieser Ausrichtung des Steckerbuchsengehäuses 17 wird die Arretierungsplatte 54 über die Verriegelungsnasen 49,50 des Steckerbuchsengehäuses 17 geschoben und durch Drehen in eine Position gebracht, in der die Verriegelungsnasen 49,50 mit den sektorartigen Vorsprüngen 58,59 eine Verriegelungsposition einnehmen. Danach erfolgt die Befestigung des Gehäuseteils 2 mittels der Schrauben 12,13 an der Arretierungsplatte 54.

Figur 4 zeigt eine Explosionsdarstellung von Steckerplatte 33, Stößel 45,46 mit Federn 43,44, Steckerbuchsengehäuse 17 und den unteren Teil des Gehäusechassis 7. Zur Aufnahme der Stößel 45,46 und der Federn 43,44 sind in dem Steckerbuchsengehäuse 17 zwei Sacklochbohrungen 64,65 diametral gegenüberliegend vorgesehen. Weitere Einzelheiten der Ausbildung der Steckerplatte 33 und des Steckerbuchsengehäuses 17 sind in Figur 5 dargestellt. An der Steckerplatte 33 ist der zylindrische Ansatz 38 zur Führung und Lagerung des mit einem dem Ansatz 38 entsprechenden zylindrischen Ausnehmung 52 versehenen Steckerbuchsengehäuses 17 vorgesehen. Die in horizontaler Richtung auf einer Ebene H in der Steckerplatte 33 befestigten Steckerstifte 15, 16 erstrecken sich im zusammengesetzten Zustand von Steckerplatte 33 und Steckerbuchsengehäuse 17 in die sich ebenfalls mit ihrer Längsausdehnung in horizontaler Richtung erstreckende Einstecköffnung 47. In dem zylindrischen Ansatz 38 sind vier Rastpositionen bzw. Rastlöcher 39 bis 42 für die beiden im Steckerbuchsengehäuse federnd gelagerten Stößel 45,46 eingeformt. Die diametral gegenüberliegenden Rastpositionen 39 und 42 weisen eine geringe Tiefe auf, die derart bemessen ist, daß ein leichtes Einbzw. Ausrasten der abgerundeten Enden der Stößel 45 und 46 gewährleistet ist, während die diametral gegenüberliegenden Rastpositionen 40 und 41 als Sacklochbohrungen mit einer Tiefe ausgebildet sind, die ein Ausrasten der in diesen eingerasteten Stößel 45,46 sehr erschwert oder auch ganz verhindert. Die Rastpositionen 40 und 41 dienen demnach in Verbindung mit den in diese einrastenden Stößel 45,46 als Drehbegrenzungsanschlag für das drehbar gelagerte Steckerbuchsengehäuse 17.

Bedingt durch die schmale, längliche Form der Einstecköffnung 47 des Steckerbuchsengehäuses 17 und der auf diese Form abgestellten Anordung der in der Steckerplatte 33 fest angeordneten Steckerstifte 15,16 und der auf diese Gegebenheiten angepaßten Form und Ausbildung der Gerätesteckdose 102 des Netzkabels 100, kann in gekoppeltem Zustand der Gerätesteckdose 102 mit dem Steckerbuchsengehäuse 17 das Steckerbuchsengehäuse 17 nicht gedreht und somit das abnehmbare Gehäuseteil 2 bzw. 3 nicht vom Gehäuse 1 gelöst werden.

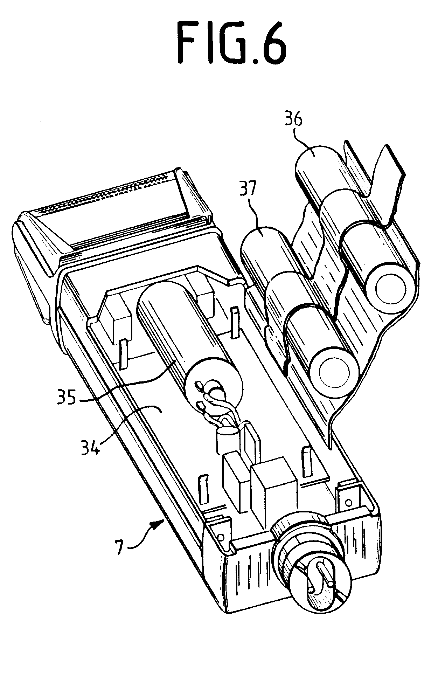

Um das Gehäuse 2,3 vom Gehäuse 1 abnehmen zu können, ist es erforderlich, die Gerätesteckdose 102 des eine elektrische Spannung zuführenden Netzkabels 100 aus dem Steckerbuchsengehäuse 17 des elektrischen Geräts herauszuziehen. Danach können durch Drehen des Steckerbuchsengehäuses 17, beispielsweise mittels einer in die Schlitze 18 und 19 des Steckerbuchsengehäuses 17 eingeführten Münze, die hinter den sektorartigen Vorsprüngen 58,59 befindlichen Verriegelungsnasen 49,50 aus dieser Verriegelungsposition in eine Entriegelungsposition verstellt (siehe Fig. 6) und das Gehäuseteil 2 bzw. das Wandteil 105 mit dem Gehäuseteil 2 von dem Steckerbuchsengehäuse 17 abgenommen werden. Anschließend kann die Hülse 8 vom Gehäusechassis 7 abgezogen und die danach freigelegten Speicherzellen 36,37 gemäß Figur 6 hochgeklappt, entfernt oder ausgetauscht werden. Gemäß Figur 4 sind die Verriegelungshaken 30 bis 32 an einem Träger 88 angeordnet, der bei der Montage des Trägers 88 und des Steckerbuchsengehäuses 17 mit der Steckerplatte 33 fest verbindbar ist, während gemäß Figur 5 der Träger 88 mit der Steckerplatte 33 einteilig verbunden sein kann.

Bei der in Fig. 3,4 dargestellten Ausführungsform ist der Drehbereich des Steckerbuchsengehäuses 17 mittels der Rastpositionen 39 bis 42 auf der Steckerplatte 33 und der in diese einrastenden Stößel 45 und 46 sowie durch die in den Figuren 4 und 5 dargestellte und beschriebene Ausbildung der Rastpositionen 39 bis 42 begrenzt. Der Drehbereich in oder entgegen der Uhrzeigerrichtung beträgt in etwa 90° und schließt demzufolge eine formschlüssige Steckverbindung der Gerätesteckdose 102 mit dem Steckerbuchsengehäuse 17 bei einem in Entriegelungsposition (Figur 6) befindlichen Steckerbuchsengehäuse 17 aus. Da in der Entriegelungsposition des Steckerbuchsengehäuses 17 dessen Stößel 45 und 46 in den tiefer ausgebildeten Rastpositionen 40 und 41 eingerastet sind, ist sichergestellt, daß auch bei einem abgenommenen Gehäuse 2, einschließlich Hülse 8, das Steckerbuchsengehäuse 17 nicht ohne weiteres in oder entgegen der Uhrzeigerrichtung weitergedreht werden kann.

Wie aus Figur 2 hervorgeht, weist das topfartige Gehäuseteil 2 an seiner einen Breitseite ein freitragendes Wandelement 105 auf, das etwas schmäler ist als die Breitseite des Gehäuses 1 und in eine in der Breitseite des Gehäuses 1 vorgesehene längliche Ausnehmung 90 einfügbar ist.

## Patentansprüche

1. Elektrogerät mit einem Gehäuse (1) zur Aufnahme wenigstens eines Funktionsteils (35) und mindestens einer mit dem Funktionsteil zusammenwirkenden und aufladbaren Speicherzelle (36) einer Speicherzellenladeschaltung sowie mit einem am Gerät vorgesehenen Gerätestecker, der aus einem Steckerbuchsengehäuse (17) mit einer Steckerstifte (15,16) aufweisenden Einstecköffnung (47) besteht, die zur Aufnahme einer Gerätesteckdose (102) eines Netzkabels (100) für die Stromversorgung der Speicherzelle (36) dient, dadurch gekennzeichnet, daß das Steckerbuchsengehäuse (17) und/oder die Steckerstifte (15,16) drehbar angeordnet sind, daß am Steckerbuchsengehäuse (17) mit einem abnehmbaren Gehäuse (1) bzw. Gehäuseteil (2, 3) zusammenwirkende Riegelelemente (49, 50, 58, 59) vorgesehen sind und daß Mittel zur Unterbrechung einer im Gehäuse (1) angeordneten Stromversorgungsleitung (27, 28) vorgesehen sind.

2. Elektrogerät nach Anspruch 1, dadurch gekennzeichnet, daß das Steckerbuchsengehäuse (17) im Gehäuse (1) des Gerätes gegenüber den Steckerstiften (15,16) drehbar aufgenommen ist.

3. Elektrogerät nach Anspruch 1 oder 2, dadurch gekennzeichnet, daß die Steckerstifte (15,16) auf einer Steckerplatte (33) feststehend angeordnet und über mindestens je eine eine Sollbruchstelle (98) aufweisende Leiterfahne (27,28) mit der bzw. den Speicherzellen (36,37) verbunden sind.

4. Elektrogerät nach Anspruch 3 dadurch gekennzeichnet, daß das Gerät aus einem Gehäusechassis (7), mindestens einem auf das Gehäusechassis (7) aufbringbaren Gehäuse (1) und einem das Gehäuse (1) vervollständigenden Gehäuseteil (2 bzw. 3) gebildet ist, wobei das Gehäuse (1) und/oder das Gehäusechassis (7) zur Aufnahme des Steckerbuchsengehäuses (17) und der Steckerplatte (33) dient.

5. Elektrogerät nach einem oder mehreren der vorhergehenden Ansprüche, dadurch gekennzeichnet, daß ein Teil des Gehäuses (1) als Hülse (8) ausgebildet ist, die auf das Gehäusechassis (7) soweit aufschiebar ist, bis sie gegen eine am Gehäuse bzw. Gehäusechassis (7) vorgesehene Anschlagwand (6) zur Anlage kommt.

6. Elektrogerät nach Anspruch 5, dadurch gekennzeichnet, daß das Gehäuseteil (2,3) in etwa die gleiche Außenkontur wie die Hülse (8) aufweist, topfartig ausgebildet, mit einer Öffnung (14) zur Aufnahme eines Netzgerätesteckers (101) ausgestattet und an das untere Ende der Hülse (8) ansetzbar ist.

7. Elektrogerät nach Anspruch 6, dadurch gekennzeichnet, daß das topfartige Gehäuseteil (2) an seiner einen Breitseite (4) ein freitragendes Wandelement (105) aufweist, das etwas schmäler ist als die Breitseite (4) und in eine auf einer Seite des Gehäuses (1) vorgesehene längliche Ausnehmung (90) einfügbar ist.

8. Elektrogerät nach einem oder mehreren der vorhergehenden Ansprüche 4 bis 7, dadurch gekennzeichnet, daß am unteren Ende des Chassis (7) eine nach einer Seite hin offene Ausnehmung (23) mit einer zumindest teilweise ringförmigen Nut (24) zur Aufnahme der Steckerplatte (33) mit den beiden feststehenden Steckerstiften (15,16) und zur drehbaren Aufnahme einer ringförmigen Ausnehmung (51) des Steckerbuchsengehäuses (17) vorgesehen ist.

9. Elektrogerät nach Anspruch 3 oder 4, dadurch gekennzeichnet, daß das Steckerbuchsengehäuse (17) auf einem auf der Steckerplatte (33) fest angeordneten ringförmigen Ansatz (38) begrenzt drehbar gelagert ist.

10. Elektrogerät nach einem oder mehreren der vorhergehenden Ansprüche, dadurch gekennzeichnet, daß das Steckerbuchsengehäuse (17) zylinderförmig ausgebildet ist und an seinem Gehäusemantel mindestens eine Verriegelungsnase (49,50) aufweist.

11. Elektrogerät nach einem oder mehreren der vorhergehenden Ansprüche, dadurch gekennzeichnet, daß auf den Gehäusemantel des Steckerbuchsengehäuses (17) eine Arretierungsplatte (54) aufsetzbar ist, die mit mindestens einer, eine Erweiterung (60,61) aufweisenden Öffnung (53) derart versehen ist, daß die Arretierungsplatte (54) mit der Öffnung (53) und der Erweiterung (60,61) über die Verriegelungsnase (49,50) schiebbar und dann durch Drehen des Steckerbuchsengehäuses (17) und/oder der Arretierungsplatte hinter der Verriegelungsnase (49,50) festsetzbar ist.

12. Elektrogerät nach Anspruch 11, dadurch gekennzeichnet, daß das topfartige Gehäuseteil (2,3) über Verbindungselemente mit der Arretierungsplatte (54) lösbar verbindbar ist.

13. Elektrogerät nach einem oder mehreren der vorhergehenden Ansprüche, dadurch gekennzeichnet, daß in dem Gehäuseteil (2,3) eine Öffnung (14) vorgesehen ist, durch die sich in angebautem Zustand des Gehäuseteils (2,3) am Gehäuse (1) das Steckerbuchsengehäuse (17) mit den beiden Steckerstiften (15,16) erstreckt.

14. Elektrogerät nach einem oder mehreren der vorhergehenden Ansprüche, dadurch gekennzeichnet, daß das Steckerbuchsengehäuse (17) auf einer Seite gegen Stellkräfte verstellbare Arretierungselemente (45,46) aufweist, die in in der Steckerplatte (33) bzw. in dem Ansatz (38) vorgesehene Rastlöcher (39, 40, 41, 42) einrastbar sind.

15. Elektrogerät nach Anspruch 14, dadurch gekennzeichnet, daß die Rastlöcher (39, 40, 41, 42) unterschiedlich tief ausgebildet sind.

16. Elektrogerät nach Anspruch 3, dadurch gekennzeichnet, daß die Leiterfahnen (27,28) winkelförmig ausgebildet sind, wobei der eine Schenkel der Leiterfahnen (27,28) mit der Steckerplatte (33) oder mit den Steckerstiften (15,16) fest verbunden und der andere Schenkel in einer im Gehäuseteil (2,3) vorgesehenen schlitzartigen Öffnung (87) aufgenommen ist.

17. Elektrogerät nach einem oder mehreren der vorhergehenden Ansprüche, dadurch gekennzeichnet, daß das Steckerbuchsengehäuses (17) stirnseitig mit mindestens einer schlitzartigen Aussparung (18,19) zur Aufnahme eines Stellelementes versehen ist.

18. Elektrogerät nach Anspruch 3, dadurch gekennzeichnet, daß durch Drehen des Steckerbuchsengehäuses (17) die Leiterfahnen (27, 28, 27′, 28′) zerstört werden.

19. Elektrogerät nach Anspruch 14, dadurch gekennzeichnet, daß die am Steckerbuchsengehäuse (17) vorgesehenen Arretierungselemente (45, 46) beim Drehvorgang des Steckerbuchsengehäuses (17) gegen die Leiterfahnen (27′,28′) bewegt werden und diese durchtrennen.

20. Elektrogerät nach Anspruch 3 und 14, dadurch gekennzeichnet, daß sich auf der Stirnfläche des Ansatzes (38) im Anschluß an die Raststelle zur Aufnahme der Arretierungselemente (45,46) eine kreisbogenförmige Vertiefung (70) anschließt, über die die Leiterfahne gelegt und auf der der Stößel geführt ist.

## Claims

1. An electrical appliance comprising a housing structure (1) for accommodating at least one functional component (35) and at least one rechargeable storage cell (36) cooperating with said functional component, a storage cell charging circuitry as well as an appliance plug provided on the appliance and comprising a connector base (17) having a receiving aperture (47) in which contact pins (15, 16) are provided for engagement with a mating connector (102) of a power cord (100) supplying electrical power to said storage cell (36), characterized in that said connector base (17) and/or said contact pins (15, 16) are rotatably mounted, that latching elements (49, 50, 58, 59) cooperating with a detachable housing structure (1) or housing portion (2, 3) are provided on said connector base (17), and that means are provided for interrupting a power supply lead (27, 28) arranged in said housing structure (1).

2. The electrical appliance as claimed in claim 1, characterized in that said connector base (17) is received in said housing structure (1) of the appliance so as to be rotatable relative to said contact pins (15, 16).

3. The electrical appliance as claimed in claim 1 or claim 2, characterized in that said contact pins (15, 16) are fixedly disposed on a plug mounting structure (33) and connected to said storage cell or cells (36, 37) by means of at least one terminal lug (27, 28) having a rupture joint (98).

4. The electrical appliance as claimed in claim 3, characterized in that the appliance is formed of a housing frame (7), at least one housing structure (1) adapted to be mounted on said housing frame (7), and a housing portion (2 or 3) completing said housing structure (1), wherein said housing structure (1) and/or said housing frame (7) serve the function of receiving said connector base (17) and said plug mounting structure (33).

5. The electrical appliance as claimed in one or several of the preceding claims, characterized in that part of said housing structure (1) is configured as a shell (8) adapted to be slipped onto said housing frame (7) until its abutment with an abutment wall (6) provided on said housing structure or said housing frame (7).

6. The electrical appliance as claimed in claim 5, characterized in that said housing portion (2, 3) has approximately the same outer contour as said shell (8), is of a cup-shaped configuration, includes an opening (14) for receiving a connector (102), and is adapted to be attached to the bottom end of said shell (8).

7. The electrical appliance as claimed in claim 6, characterized in that said cup-shaped housing portion (2) has on one side a freely extending wall member (105) of a width somewhat less than the width of said housing structure (1), said wall member being insertable into an elongate cutout (90) provided on one side of said housing structure (1).

8. The electrical appliance as claimed in one or several of the preceding claims 4 to 7, characterized in that at the bottom end of said frame (7) an aperture (23) is provided which is open at one side, has an at least partially annular groove (24) for receiving said plug mounting structure (33) with said two fixed contact pins (15, 16) and for receiving in a rotatable relationship thereto an annular shoulder (51) of said connector base (17).

9. The electrical appliance as claimed in claim 3 or claim 4, characterized in that said connector base (17) is rotatable within limits relative to an annular step (38) fixedly arranged on said plug mounting structure (33).

10. The electrical appliance as claimed in one or several of the preceding claims, characterized in that said connector base (17) is of a cylindrical configuration having on its circumferential outer surface at least one latching tab (49, 50).

11. The electrical appliance as claimed in one or several of the preceding claims, characterized in that a locking plate (54) is seatable on the circumferential outer surface of said connector base (17), said plate having at least one opening (53) with an enlargement (60, 61) configured such as to enable said locking plate (54) to be slipped with said opening (53) and said enlargement (60, 61) over said latching tab (49, 50), to be subsequently located in position behind said latching tab (49, 50) using a rotating motion of said connector base (17) and/or said locking plate.

12. The electrical appliance as claimed in claim 11, characterized in that said cup-shaped housing portion (2, 3) is adapted to be detachably connected to said locking plate (54) by coupling means.

13. The electrical appliance as claimed in one or several of the preceding claims, characterized in that said housing portion (2, 3) has an opening (14) through which said connector base (17) extends with said two contact pins (15, 16) when said housing portion (2, 3) is mounted on said housing structure (1).

14. The electrical appliance as claimed in one or several of the preceding claims, characterized in that said connector base (17) has on one side detent means (45, 46) displaceable against actuating forces, which are adapted for locking engagement with mating notches (39, 40, 41, 42) provided in said plug mounting structure (33) or said step (38).

15. The electrical appliance as claimed in claim 14, characterized in that said notches (39, 40, 41, 42) are of different depths.

16. The electrical appliance as claimed in claim 3, characterized in that said terminal lugs (27, 28) are angled, the one arm of said terminal lugs (27, 28) being fixedly coupled to said plug mounting structure (33) or said contact pins (15, 16), the other arm being received in a slotted opening (87) provided in said housing portion (2, 3).

17. The electrical appliance as claimed in one or several of the preceding claims, characterized in that said connector base (17) has at its end at least one slotted recess (18, 19) for receiving an actuator.

18. The electrical appliance as claimed in claim 3, characterized in that said terminal lugs (27, 28, 27′, 28′) are destroyed by rotation of said connector base (17).

19. The electrical appliance as claimed in claim 14, characterized in that rotation of said connector base (17) causes movement of said detent means (45, 46) provided on said connector base (17) against said terminal lugs (27′, 28′), severing them.

20. The electrical appliance as claimed in claims 3 and 14, characterized in that next to said notch receiving said detent means (45, 46) a recess (70) in circular-arc shape is provided on the end surface of said step (38), said terminal lug being placed over said recess with said detent means being guided thereon.

## Revendications

1. Appareil électrique comportant un boîtier (1) pour le logement d'au moins un élément fonctionnel (35) et d'au moins une cellule d'accumulation (36), d'un circuit de charge de cellules d'accumulation, qui coopère avec l'élément fonctionnel et qui peut être chargée, et comportant une fiche mâle d'appareil prévue sur l'appareil et qui est constituée d'un boîtier pour douilles de connexion (17) comportant un orifice d'enfichage (47) qui présente des broches de connexion (15, 16) et qui sert au logement d'une fiche femelle d'appareil (102) d'un câble de réseau (100) pour l'alimentation en courant de la cellule d'accumulation (36), caractérisé en ce que le boîtier pour douilles de connexion (17) et/ou les broches de connexion (15, 16) sont agencés de façon à pouvoir tourner, en ce que sur le boîtier pour douilles de connexion (17) sont prévus des éléments de blocage (49, 50, 58, 59) qui coopèrent avec un boîtier (1) ou élément de boîtier (2, 3) qui peut être retiré et en ce que des moyens sont prévus pour l'interruption d'un conducteur d'alimentation de courant (27, 28) agencé dans le boîtier (1).

2. Appareil électrique suivant la revendication 1, caractérisé en ce que le boîtier pour douilles de connexion (17) est logé, de façon à pouvoir tourner par rapport aux broches de connexion (15, 16), dans le boîtier (1) de l'appareil.

3. Appareil électrique suivant la revendication 1 ou 2, caractérisé en ce que les broches de connexion (15, 16) sont agencées de façon fixe sur une plaque de connecteur (33) et sont reliées, par au moins chaque fois une bande conductrice (27, 28) qui présente un endroit destiné à la rupture (98), à la ou aux cellules d'accumulation (36, 37).

4. Appareil électrique suivant la revendication 3, caractérisé en ce que l'appareil est formé par un châssis de boîtier (7), par au moins un boîtier (1) qui peut être monté sur le châssis de boîtier (7) et par une partie de boîtier (2 ou 3) qui complète le boîtier (1), le boîtier (1) et/ou le châssis de boîtier (7) servant au logement du boîtier pour douilles de connexion (17) et de la plaque de connecteur (33).

5. Appareil électrique suivant une ou plusieurs des revendications précédentes, caractérisé en ce qu'une partie du boîtier (1) est réalisée sous la forme d'un manchon (8) qui peut être coulissé sur le châssis de boîtier (7) jusqu'à ce qu'il vienne à butée contre une paroi de butée (6) prévue sur le boîtier ou sur le châssis de boîtier (7).

6. Appareil électrique suivant la revendication 5, caractérisé en ce que la partie de boîtier (2, 3) présente approximativement le même contour externe que le manchon (8), est réalisée en forme de pot, est équipée d'une ouverture (14) pour le logement d'une fiche (101) entre appareil et réseau et peut être mise en place à l'extrémité inférieure du manchon (8).

7. Appareil électrique suivant la revendication 6, caractérisé en ce que la partie du boîtier (2) en forme de pot présente sur un de ses côtés larges (4) un élément de paroi (105) en porte-à-faux qui est quelque peu plus étroit que le côté large (4) et qui peut être introduit dans un évidement (90) allongé prévu sur un côté du boîtier (1).

8. Appareil électrique suivant une ou plusieurs des revendications 4 à 7 précédentes, caractérisé en ce qu'il est prévu à l'extrémité inférieure du châssis (7) une cavité (23) ouverte vers un côté et comportant une rainure (24), au moins partiellement annulaire, pour le logement de la plaque de connecteur (33) comportant les deux broches de connexion (15, 16) fixes et pour le logement, de façon à pouvoir tourner, d'une cavité annulaire (51) du boîtier pour douilles de connexion (17).

9. Appareil électrique suivant la revendication 3 ou 4, caractérisé en ce que le boîtier pour douilles de connexion (17) est monté, de façon à pouvoir tourner de manière limitée, sur un prolongement (38) annulaire agencé fixement sur la plaque de connecteur (33).

10. Appareil électrique suivant une ou plusieurs des revendications précédentes, caractérisé en ce que le boîtier pour douilles de connexion (17) est réalisé en forme de cylindre et présente sur son enveloppe de boîtier au moins une saillie de blocage (49, 50).

11. Appareil électrique suivant une ou plusieurs des revendications précédentes, caractérisé en ce que sur l'enveloppe du boîtier pour douilles de connexion (17) peut être montée une plaque d'arrêt (54) qui est équipée d'au moins une ouverture (53), présentant un agrandissement (60, 61), de façon que la plaque d'arrêt (54) comportant l'ouverture (53) et l'agrandissement (60, 61) puisse être glissée sur la saillie de blocage (49, 50) et puisse être alors fixée derrière la saillie de blocage (49, 50) par rotation du boîtier pour douilles de connexion (17) et/ou de la plaque d'arrêt.

12. Appareil électrique suivant la revendication 11, caractérisé en ce que la partie de boîtier (2, 3) en forme de pot peut être reliée de façon détachable à la plaque d'arrêt (54) par l'intermédiaire d'éléments de liaison.

13. Appareil électrique suivant une ou plusieurs des revendications précédentes, caractérisé en ce que dans la partie de boîtier (2, 3) est prévue une ouverture (14) à travers laquelle s'étend, à l'état monté de la partie de boîtier (2, 3) sur le boîtier (1), le boîtier pour douilles de connexion (17) comportant les deux broches de connexion (15, 16).

14. Appareil électrique suivant une ou plusieurs des revendications précédentes, caractérisé en ce que le boîtier pour douilles de connexion (17) présente, sur un côté, des éléments d'arrêt (45, 46) qui peuvent être déplacés à l'encontre de forces de réglage et qui peuvent pénétrer dans des trous d'accrochage (39, 40, 41, 42) prévus dans la plaque de connecteur (33) ou dans le prolongement (38).

15. Appareil électrique suivant la revendication 14, caractérisé en ce que les trous d'accrochage (39, 40, 41, 42) sont réalisés avec des profondeurs différentes.

16. Appareil électrique suivant la revendication 3, caractérisé en ce que les bandes conductrices (27, 28) sont réalisées de façon coudée, une aile des bandes conductrices (27, 28) étant reliée de façon fixe à la plaque de connecteur (33) ou aux broches de connexion (15, 16) et l'autre aile étant logée dans une ouverture (87) en genre de rainure et prévue dans la partie de boîtier (2, 3).

17. Appareil électrique suivant une ou plusieurs des revendications précédentes, caractérisé en ce que le boîtier pour douilles de connexion (17) est équipé, du côté frontal, d'au moins un évidement (18, 19) en genre de rainure pour le logement d'un élément de réglage.

18. Appareil électrique suivant la revendication 3, caractérisé en ce que les bandes conductrices (27, 28, 27′, 28′) sont détruites par rotation du boîtier pour douilles de connexion (17).

19. Appareil électrique suivant la revendication 14, caractérisé en ce que les éléments d'arrêt (45, 46) qui sont prévus sur le boîtier pour douilles de connexion (17) sont déplacés vers les bandes conductrices (27′, 28′) lors du processus de rotation du boîtier pour douilles de connexion (17) et coupent ceux-ci par traversée.

20. Appareil électrique suivant la revendication 3 et la revendication 14, caractérisé en ce qu'une cavité (70) en forme d'arc de cercle, au-dessus de laquelle sont posées les bandes conductrices et sur laquelle sont guidés les éléments d'arrêt, se raccorde sur la surface frontale du prolongement (38), à la suite de l'endroit d'accrochage, pour recevoir les éléments d'arrêt (45, 46).
